# EUROPÄISCHE PATENTANMELDUNG

(11) **EP 1 197 848 A2**
(43) Veröffentlichungstag der Anmeldung: **17.04.2002**
(21) Anmeldenummer: 01116042.1
(22) Anmeldetag: 02.07.2001
(51) Int. Cl.: G06F 9/44

(54) **Verfahren zur automatischen Erzeugung von Programmcode**

(30) Priorität: 22.08.2000 DE 10041072
(71) Anmelder: SIEMENS AKTIENGESELLSCHAFT, 80333 München (DE)
(72) Erfinder: Bozionek, Bruno, 33178 Borchen (DE); Lingscheid, Victor, 33102 Paderborn (DE); Littmann, Joerg, 33129 Delbrueck (DE)

(57) **Zusammenfassung**

Ein Verfahren zur automatisierten Erzeugung von Software für einen Computer unter Verwendung von in ablauffähigem Code vorliegenden Komponenten (A-T) bildet diese als Symbole graphisch ab. Eine Ausgangsschnittstelle (1,8,14,19,25,34) kann durch eine gerichtete Verknüpfung (5,6,17,22,28,31,35) mit einer Eingangsschnittstelle (2,10,13,18,24,33) verbunden werden. Es wird Programmcode erzeugt, der entsprechend den ausgewählten gerichteten Verknüpfungen (5,6,17,22,28,31,35) ein ablauffähiges Gesamtprogramm erzeugt.

## Beschreibung

Die vorliegende Erfindung betrifft ein Verfahren zur automatisierten Erzeugung von Programmcode und einen Computer, der so programmiert ist, daß dieses Verfahren in diesem ablaufbar ist. Weiter betrifft die vorliegende Erfindung ein Verfahren, mit dem es programmierunkundigen Personen ermöglicht wird, mit Hilfe graphischer Symbole auf einer Benutzeroberfläche eine Telekommunikationsanlage benutzerspezifisch einzurichten.

Programmcode - in der Literatur häufig als Software bezeichnet - besteht für gewöhnlich aus mehreren Programmteilen, denen jeweils bestimmte Teilaufgaben zugeordnet werden. Bei der Entwicklung von Software wird eine möglichst hohe Wiederverwendbarkeit bereits einmal programmierter Programmteile angestrebt. Dadurch können bereits getestete Unterprogramme, deren weitgehende Fehlerfreiheit und Funktionsfähigkeit feststeht, in kurzer Zeit zu neuen Programmen verbunden werden. Die für die Entwicklung von Anwendungssoftware benötigte Zeit wird dadurch erheblich herabgesetzt, da bei einer Entwicklung von Software ein Großteil der Entwicklungszeit auf eine Fehlersuche und Testphase entfällt. Besteht ein neues Anwenderprogramm lediglich aus der Kombination bereits getesteter Unterprogramme, so ist die Zeitersparnis evident. Die Unterprogramme liegen dabei oft bereits compiliert in maschinenlesbarem Code vor. Solche selbständig für sich compilierbaren Unterprogramme werden in einer Reihe von Programmiersprachen als Module bezeichnet. Vorliegend soll die Bezeichnung Komponente verwendet werden als allgemeinerer Begriff, der sich nicht auf eine spezielle Programmiersprache bezieht.

Software-Komponenten wiederum enthalten bestimmte Funktionen, Prozeduren oder Methoden, die mit Daten als Parameter aufgerufen werden können. Die Wahl der Bezeichnung hängt von der konkret benutzten Programmiersprache ab. Die bei objektorientierten Sprachen zumeist übliche Bezeichnung als Methode wird im folgenden verwendet. Eine Komponente kann dabei eine einzige oder mehrere Methoden aufweisen.

Um aus solchen bereits bestehenden Komponenten ein funktionsfähiges Softwareprogramm zu bilden, ist es nötig, ein die einzelnen Komponenten miteinander verbindenden Zwischencode zu erstellen. Insbesondere sind die Datenformate der von einer Komponente an eine weitere Komponente zu übergebenden Daten, mit denen eine Methode aufgerufen wird, aneinander anzupassen und Codeteile zu schreiben, welche die Methoden aufrufen. Ein Aufruf von Methoden kann dabei eventuell auch abhängig von Bedingungen sein. Weiter sind Codeteile zu schreiben, mit denen Methoden, die in einer Komponente implementiert sind, umgesetzt werden auf andere Methoden, die in einer anderen Komponente aufrufbar sein sollen, dort aber nicht implementiert sind.

Dieser Zwischencode wird im wesentlichen manuell erstellt. Es ist lediglich bekannt, Funktionsrümpfe für diesen Zwischencode automatisch zu generieren. Ein Beispiel einer solchen komponenten-basierter Architektur ist das COM/DCOM Modell der Fa. Microsoft.

Insbesondere bei Telekommunikationsanlagen ist es nötig, die Steuerungssoftware individuell auf die Bedürfnisse der jeweiligen Benutzer anzupassen. Die Steuerungssoftware solcher Telekommunikationsanlagen weist viele Programmabschnitte oder Komponenten auf, die für an unterschiedliche Benutzer angepaßte Steuerungsprogramme gleich sind. Eine Anpassung kann daher durch die Verknüpfung solcher Komponenten zeitsparend und kostengünstig erfolgen.

Nachteilig an dem Stand der Technik ist, daß die Weiterverwendung von bestehendem Programmcode nur bei Erzeugung von Zwischencode von Hand möglich ist und die Erzeugung von Software für eine programmierunkundige Person kaum zu bewirken ist. Weiter ist nachteilig, daß die Anpassung der Steuerung einer modernen komplexen Telekommunikationsanlage an die individuellen Bedürfnisse eines Benutzers für eine programmierunkundige Person nicht möglich ist.

Der vorliegenden Erfindung liegt die Aufgabe zugrunde, ein Verfahren zur Verfügung zu stellen, mit dem Software automatisch, unter Verknüpfung bestehender Komponenten aus Programmcode erzeugt werden kann. Weiter ist es Aufgabe der Erfindung, ein Verfahren zur Verfügung zu stellen, mit dem die Steuerung einer Telekommunikationsanlage individuell auch von Laien angepaßt werden kann.

Diese Aufgabe wird durch ein Verfahren gemäß dem beigefügten Anspruch 1 und einer Vorrichtungen gemäß Anspruch 20 gelöst.

Vorteilhafte Weiterbildungen der Erfindung sind in den Unteransprüchen angegeben.

Beim erfindungsgemäßen Verfahren zur automatisierten Erzeugung von Software wird in einem graphischen Editor - beispielsweise mit Hilfe eines Computers - in einem ersten Schritt ein Symbol entsprechend einer Komponente mit einer Eingangsschnittstelle und einer Ausgangsschnittstelle abgebildet. Die in ablauffähigem Code vorliegenden Komponenten weisen jeweils eine Eingangsschnittstelle und eine Ausgangs-schnittstelle auf, in der in der Eingangsschnittstelle Methoden der Komponente, die als Bestandteil der Komponente aufgerufen und ausgeführt werden können, definiert sind. In der Ausgangsschnittstelle sind Datenformate für Daten eines Ereignisses als Ergebnis der Ausführung einer Methode oder einer ganzen Komponente und Methoden definiert, die in der Komponente aufgerufen werden können, jedoch nicht in dieser lauffähig enthalten sind.

In einem zweiten Schritt wird eine Auswahlmöglichkeit für eine gerichtete Verknüpfung einer Ausgangsschnittstelle mit einer Eingangsschnittstelle dargestellt. Anschließend wird in Abhängigkeit der vorgenommenen Verknüpfungen ein die Komponenten verknüpfender Programmcode erzeugt. Dieser ruft beispielsweise abhängig von Ereignissen Methoden auf, die in der Eingangsschnittstelle definiert sind, und der an die aufzurufende Methode zu übergebenden Daten des Ereignisses der Empfangsschnittstelle übergibt, und/oder es wird Programmcode erzeugt, der die Datenformate der aufrufbaren Methodenaufrufe in der Ausgangsschnittstelle in die Datenformate der verfügbaren Methodenaufrufe der Eingangsschnittstelle umsetzt.

In einer vorteilhaften Ausgestaltung der Erfindung werden die Definition der über die Verknüpfungen aufrufbaren Methodenaufrufe in der Ausgangsschnittstelle mit der Definition verfügbarer Methodenaufrufe der Eingangsschnittstelle verglichen und/oder die Datenformate eines Ereignisses der Ausgangs-schnittstelle werden mit den an eine Methode der Eingangsschnittstelle zu übergebenden Datenformaten verglichen. In Abhängigkeit des Vergleichsergebnisses werden die Datenformate der Methodenaufrufe und der an diese zu übergebenden Daten angepaßt, falls diese nicht kompatibel sind.

Günstig an dem erfindungsgemäßen Verfahren ist, daß ein Benutzer keine Kenntnisse der Programmiersprache benötigt, in welcher der Zwischencode erstellt wird. Auch eine programmmierunkundige Person kann durch graphisch dargestellte Auswahlmöglichkeiten für Verknüpfungen, beispielsweise Pfeile, auf einfache Weise Verknüpfungen zwischen entsprechenden Komponenten erstellen. Die Codegenerierung erfolgt automatisch.

Vorteilhaft können Verknüpfungen von einem Ereignis oder eine Methode einer Ausgangsschnittstelle zu mehreren Methoden von Eingangsschnittstellen gewählt werden, und es kann eine Auswahlmöglichkeit für eine Bedingung für die Auswahl der Eingangsschnittstelle des zu bildenden Programmcodes der Verknüpfung angeboten werden. Auf diese Weise können auch sogenannte Schleifen gebildet werden, indem die Eingangsschnittstelle und die Ausgangsschnittstelle derselben Komponente angehören.

Vorteilhaft kann eine Komponente mehrfach als Symbol dargestellt und die Symbole für Komponenten auf einer Darstellungsfläche frei angeordnet werden.

Der Programmcode kann in einer sogenannten Compilersprache erzeugt, anschließend kompiliert und mit den Komponenten zu einem lauffähigen Programm gebunden werden. Bei Verwendung eines Compilers und einer dazu nötigen Link-Einrichtung wird schneller Code erzeugt, der dadurch, daß kein Interpreter nötig ist, wenig Speicherplatz benötigt, da das gebildete Gesamtprogramm für sich allein lauffähig ist.

Alternativ kann der Programmcode in einer sogenannten Interpretersprache erzeugt und hierzu vorteilhaft die bekannte Interpretersprache XML (eXtensible Markup Language) verwendet werden.

Günstig wird der Programmcode mit den Komponenten als dynamischer Bibliothek und einem Interpreter zu einem lauffähigen Gesamtprogramm zusammengefaßt. Vorteilhaft wird somit kein Compiler benötigt.

Durch Verbinden einer oder mehrerer Komponenten nach obigen Verfahren können neue Gesamtkomponenten gebildet und für nachfolgende Anwendungen gespeichert werden. Dabei kann festgelegt werden, welche Teile der Ausgangsschnittstellen der benutzten Komponenten die Ausgangsschnittstelle der Gesamtkomponente und welche Teile der Eingangsschnittstellen der benutzten Komponenten die Eingangsschnittstelle der Gesamtkomponente bilden.

Vorteilhaft wird das beschriebene Verfahren zur Erzeugung der Steuerungssoftware einer Telekommunikationsanlage verwendet. Dabei kann das Verfahren auf einem Steuerungscomputer der Telekommunikationsanlage selbst angewandt werden.

Erfindungsgemäß wird ein Computer, insbesondere ein Steuerungscomputer einer Telekommunikationsanlage so programmiert, daß ein zuvor beschriebenes Verfahren auf diesem ablaufen kann.

Die vorliegende Erfindung wird nachfolgend anhand bevorzugter Ausführungsbeispiele unter Bezugnahme auf die beigefügten Zeichnungen näher erläutert.

### Dabei zeigen:

- Fig. 1:: eine Darstellung zweier Komponenten als Symbole mit einer Verknüpfung zwischen einer Ausgangsschnittstelle und einer Eingangsschnittstelle;
- Fig. 2:: eine beispielhafte tabellarische Gegenüberstellung anzupassender Parameter;
- Fig. 2a:: die Zuordnung der Parameter aus Fig. 2 in Deklarationen zugehöriger Methoden;
- Fig. 3:: einen Ausdruck des erzeugten Zwischencodes für eine Verknüpfung zweier Methoden in einer Compilersprache;
- Fig. 4:: einen Ausdruck des erzeugten Zwischencodes für eine Verknüpfung zweier Methoden in einer Interpretersprache;
- Fig. 5:: zwei Verknüpfungen von einer Ausgangsschnittstelle zu zwei verschiedenen Eingangsschnittstellen;
- Fig. 6:: die erfindungsgemäße graphische Darstellung eines Gesamtprogramms mit den gebildeten Verknüpfungen;
- Fig. 7:: eine Verknüpfung von einer Ausgangs-Schnittstelle zu drei Eingangsschnittstellen;
- Fig. 8:: eine bedingte Verknüpfung zu zwei Eingangsschnittstellen;
- Fig. 9:: eine mit einer bedingten Verknüpfung gebildete Schleife;
- Fig. 10:: zwei Verknüpfungen zu derselben Eingangsschnittstelle; und
- Fig. 11:: eine durch das erfindungsgemäße Verfahren aus bestehenden Komponenten neu zusammengestellte Komponente in einer beispielhaften Darstellung eines graphischen Editors.

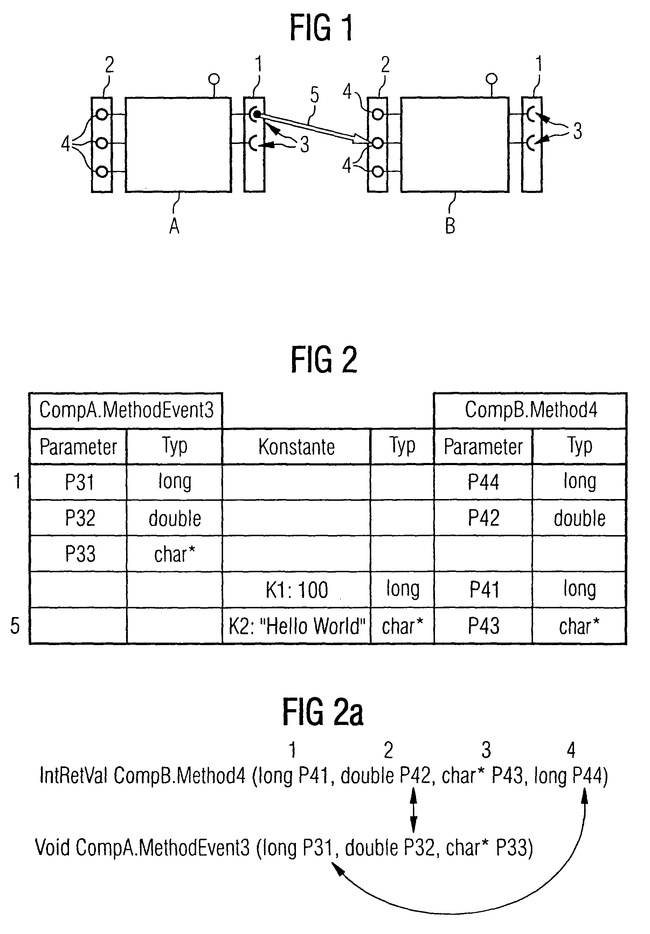

Fig. 1 zeigt eine schematische Darstellung zweier Komponenten A,B mit einer die Komponenten A,B verbindenden Verknüpfung 5. Die Komponente A und die Komponente B weisen jeweils eine Ausgangsschnittstelle 1 und eine Eingangsschnittstelle 2 auf, die im vorliegenden Ausführungsbeispiel durch einen Rahmen angedeutet sind. In den Ausgangsschnittstellen 1 sind Ereignisse 3, die als Ergebnis der Ausführung einer Methode der Komponente A,B auftreten können, und Methoden 3 definiert, die in der Komponente A,B aufrufbar sein sollen, deren Code jedoch nicht in der Methode selbst, sondern anderweitig implementiert ist. In den Figuren sind diese Ereignisse und Methoden jeweils zusammenfassend mit einem Bezugszeichen bezeichnet, hier mit dem Bezugszeichen 3. In den Eingangsschnittstellen 2 sind Methoden 4 der Komponenten A,B definiert, die als Bestandteil der Komponenten aufgerufen werden können. Diese Methoden 4 sind in den Komponenten A,B implementiert.

Die Komponenten A,B werden bei dem hier beispielhaft dargestellten erfindungsgemäßen Verfahren entsprechend der Figur 1 in einem graphischen Editor abgebildet. Ein Benutzer kann nun eine gerichtete Verknüpfung 5 zwischen einer Ausgangsschnittstelle 1 und einer Eingangsschnittstelle 2 auswählen, die dann ebenfalls graphisch angezeigt wird. Im vorliegenden Ausführungsbeispiel ist die gerichtete Verknüpfung 5 durch einen Doppelpfeil dargestellt. Durch diese Verknüpfung 5 wird von dem Benutzer auf ein bestimmtes Ereignis 3 hin, das in der Ausgangsschnittstelle 1 definiert ist, eine Methode 4 der Eingangsschnittstelle 2 aufgerufen. Alternativ kann eine Methode 3 die in einer Komponente A,B - hier der Komponente A - aufrufbar sein soll, dadurch definiert werden, daß durch den Zwischencode die Methode der Ausgangsschnittstelle 1 durch eine Methode 4 der Eingangsschnittstelle 2 definiert wird. Das bedeutet, daß in Fällen, in denen in der Komponente A eine Methode 3 aufgerufen wird, der Zwischencode die entsprechende gewählte Methode 4 der Eingangsschnittstelle 2 der Komponente B aufruft. Der Zwischencode setzt dabei die entsprechenden Aufrufe ineinander um. Hierzu müssen jedoch die Datenformate der Daten, die beim Aufruf der Methoden übergeben werden, aufeinander angepaßt sein.

Fig. 2 zeigt in einer Tabelle eine beispielhafte Gegenüberstellung zugeordneter und einander anzupassender Parameter von Methoden CompA,MethodEvent3, CompB.Method4 der Komponenten A,B und zusätzlich in der mittleren Spalte zu ergänzende Konstanten. Als Beispiel sind die Datenformate der bekannten Programmiersprache "C" gewählt. Zur Bezeichnung ist links eine Zeilennumerierung in Fünferschritten abgedruckt. Die beiden Parameter in der ersten und zweiten Zeile können demnach einfach aufeinander abgebildet werden, da beide Methoden CompA,MethodEvent3, CompB.Method4 identische Variablen-Definitionen aufweisen. Einer Variablen P31 vom Format "long" in der ersten Zeile entspricht eine Variable P44 vom Format "long" als Parameter. Entsprechend steht eine Variable P32 vom Format "double" eine Variable P42 vom Format "double" in der zweiten Zeile gegenüber.

In der dritten Zeile weist die Methode CompA.MethodEvent3 der Komponente A eine sogenannte String-Variable auf, die entsprechend den Konventionen der Programmiersprache "C" als Zeiger auf die erste Stelle eines hierfür allokierten Speicherbereichs definiert ist. An dieser Stelle ist der erste Buchstabe des Strings abgelegt. Er gilt als gültig vereinbart bis zu einem sogenannten Terminierungszeichen '\0' im Speicherbereich. Die aufzurufende Methode CompB.Method4 der Komponente B weist keinen entsprechenden Parameter auf. Eine Umsetzung muß insoweit hier nicht erfolgen.

In der vierten Zeile stehen sich die Konstante "100" im Format "long" in der mittleren Spalte und eine Variable P41 desselben Formats gegenüber. Ebenso steht sich in der fünften Zeile ein konstanter String und eine String-Variable P43 gegenüber. Beide Konstanten sind zu ergänzen, da sie in der Methode CompA.MethodEvent3 der Komponente A nicht vorkommen. Die Konstanten werden somit als Parameter an die Methode CompB.Method4 der Komponente B übergeben.

Fig. 2a zeigt in einer schematischen Darstellung die Zuordnung der Parameter aus Fig. 2 in Deklarationen der zugeordneten Methoden CompA,MethodEvent3, CompB.Method4. Die Darstellung entspricht in der oberen Zeile dem Programmcode, mit der die Methode (CompB.Method4) der Komponente B deklariert wird. In der unteren Zeile ist eine Methode CompA,Method Event3 deklariert, die in der Komponente A zur Verfügung stehen soll. Oberhalb ist mit den Ziffern 1 bis 4 die Reihenfolge der Parameter in den Deklarationen festgelegt.

Die Zuweisung und Anpassung der Parameter erfolgt wie in Figur 2 erläutert. Es ist nun noch die Reihenfolge der Parameter und somit die richtige Zuordnung sicherzustellen. Der erste Parameter der Methode CompA.MethodEvent3 der Komponente A ist die Variable P31, die der Variablen P44 der Methode CompB.Method4 der Komponente B entspricht. Die Variable P31 wird daher als vierter Parameter der Methode CompB.Method4 der Komponente B übergeben. Die Entsprechung ist durch einen Pfeil verdeutlicht. Der zweite Parameter der Methode CompA.MethodEvent3 der Komponente A ist die Variable P32, die der Variablen P42 der Methode CompB.Method4 der Komponente B entspricht und dieser ebenfalls als zweiter Parameter übergeben wird. Auch hier ist die Entsprechung durch einen Pfeil in der Figur verdeutlicht. Der dritte Parameter der Methode CompA.MethodEvent3 der Komponente A wird nicht übergeben, da er keine Entsprechung hat. Die fehlenden Parameter als Variablen P41 und P43 der Methode CompB.Method4 der Komponente B werden - wie unter Fig. 2 beschrieben - durch Konstanten ersetzt, und als erster Parameter und dritter Parameter an die Methode CompB.Method4 der Komponente B übergeben.

Die Daten können auch ohne explizite Umsetzung als Parameter an Methoden übergeben werden, wenn ihre Formate strikt reglementiert sind. Alle Formate von Ereignissen und Methoden, die in einer Ausgangsschnittstelle definiert sind, sind in diesem Fall in Anzahl und Datentyp so beschaffen, daß sie direkt an Methoden einer Eingangsschnittstelle als Parameter übergeben werden können. Dies ist vor allem für spezielle Anwendungen wie Sprachverarbeitungsprogramme möglich. Bei letzeren kann eine feste Zuordnung der Parameter ohne Möglichkeit der Beeinflussung bei der Verknüpfungserstellung vorgesehen werden. Dabei haben die Methoden entweder keine oder globale Variablen als Eingangsparameter.

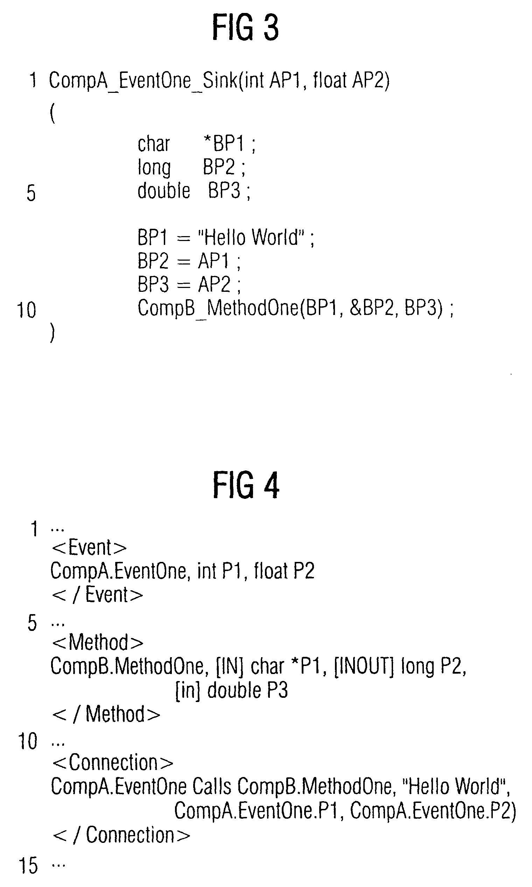

Fig. 3 zeigt als Sourcecode ein Beispiel für einen in einer Compilersprache erzeugten Zwischencode. Zur Bezeichnung ist zusätzlich in Fünferschritten eine Zeilennumerierung links abgedruckt. Die beispielhaft verwendete Programmiersprache ist "C". Hier ist der automatisch erzeugte Zwischencode abgedruckt, mit dem eine in einer Ausgangsschnittstelle definierte Methode, die in der entsprechenden Komponente nicht implementiert ist, in eine Methode in einer Eingangsschnittstelle einer Komponente umgesetzt werden kann. In einer Komponente A wird eine Methode CompA_EventOne_Sink() gefordert, die dort aber nicht implementiert ist. In einer Eingangsschnittstelle einer Komponente B steht eine Methode CompB_MethodOne() zur Verfügung. Die Figur zeigt die Methodendeklaration der Methode CompA_EventOne_Sink(). Hierzu muß eine weitere Stringvariable BP1, die in den Parametern der Methode CompB_Method-One() gefordert wird, in Zeile 3 definiert und in Zeile 6 zugewiesen werden. Weiter wird die Integer-Variable BP3 als Zeiger an die Methode CompB_MethodOne() übergeben.

Der so erzeugte Sourcecode kann nun durch einen Umsetzer - in der Literatur häufig als 'Compiler' bezeichnet - compiliert und mit einem Binder - in der Literatur häufig als 'Linker' bezeichnet - mit den Komponenten zusammen zu einem ablauffähigen Programm verbunden werden. In Abhängigkeit der Art der verwendeten Link-Einrichtung kann der Code der Komponenten auch ursprünglich in abweichenden Programmiersprachen verfaßt worden sein. Der sich ergebende Code ist sehr schnell und kommt in seiner Ablaufgeschwindigkeit nahe an manuell verfaßten Zwischencode. Nachteilig ist jedoch, daß ein Compiler und eine Link-Einrichtung für die Generierung des ablauffähigen Codes nötig sind, für die entsprechende Lizenzen erworben werden müssen.

Fig. 4 zeigt als Sourcecode ein Beispiel für in einer sogenannten Interpretersprache erzeugten Zwischencode. Zur Bezeichnung ist zusätzlich in Fünferschritten eine Zeilennumerierung links abgedruckt. Es handelt sich dabei um die bekannte Interpretersprache "eXtensible Markup Language' (XML). Auch hier wird eine in einer Ausgangsschnittstelle definierte Methode, die in der entsprechenden Komponente nicht implementiert ist, in eine Methode in einer Eingangsschnittstelle einer anderen Komponente umgesetzt. Die Methoden sind als CompA_EventOne in Zeile 3 und CompB_Method-One in Zeile 7 bezeichnet. Die Methode CompA-EventOne ruft in Zeile 12 die Methode CompB_MethodOne auf, wobei eine String-Konstante "Hello World" eingefügt wird, um die Parameterdeklaration der Methode CompB_MethodOne zu erfüllen.

Der so erzeugte Sourcecode kann nun mit Hilfe eines Interpreters zu einem lauffähigen Programm verbunden werden. Erst zur Laufzeit des Programms werden die Befehlszeilen von dem Interpreter lexigraphisch und syntaktisch analysiert und ausgeführt. Dabei werden die bereits in Maschinencode vorliegenden Methoden im Sinne einer dynamischen Bibliothek aufgerufen. Vorteilhaft stellen einige Telekommunikationsanlagen sogenannte 'Application Composer', die einen Interpreter beinhalten, zur Verfügung. Es können der Compiler und die Link-Einrichtung eingespart werden, und es entstehen keine zusätzlichen Lizenzkosten für diese Programme. Nachteilig ist jedoch die erheblich geringere Ablaufgeschwindigkeit der so gebildeten Programme. Dies fällt jedoch für nicht-echtzeitrelevante Funktionen, kaum ins Gewicht.

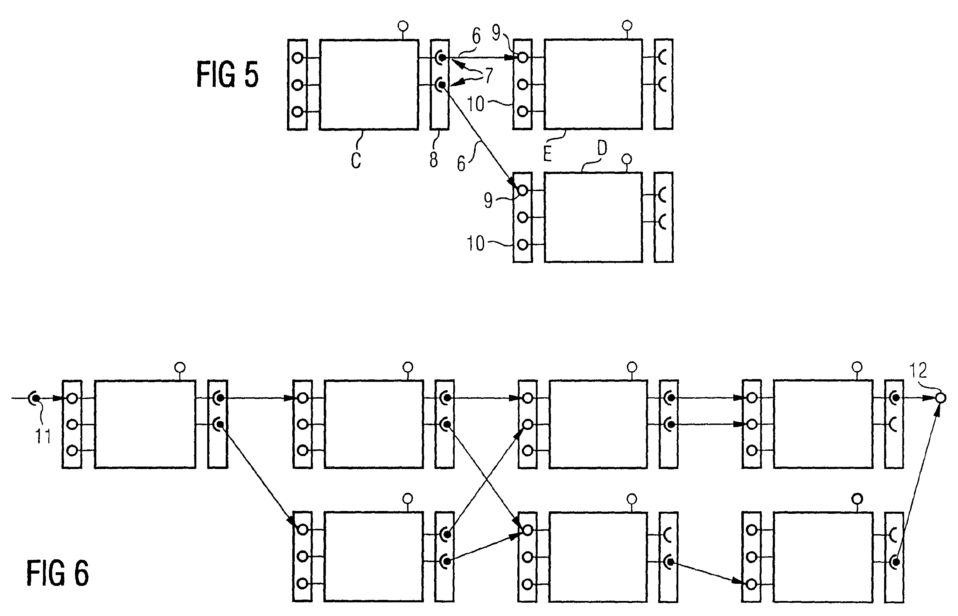

Fig. 5 zeigt ein Beispiel zweier Verknüpfungen 6 ausgehend von zwei Ereignissen oder Methoden 7 einer Ausgangsschnittstelle 8 einer Komponente C zu zwei Methoden 9 zweier Eingangsschnittstellen 10 zweier Komponenten D und E. Diese sind voneinander unabhängig; die Entscheidung, welche Verknüpfung im Programmfluß folgt, wird in der Komponente C getroffen, je nachdem, welches Ereignis eintritt.

Fig. 6 zeigt die graphische Darstellung von 7 Symbolen, die Komponenten entsprechen, mit zwischen diesen durch einen Benutzer definierten Verknüpfungen, einem Startereignis 11 und einer Terminierungsmethode 12. Dabei kann eine Komponente auch durch mehrere Symbole bezeichnet sein und somit an mehreren Stellen in dem Programmflußdiagramm auftreten. Der Übersichtlichkeit halber wurde auf weitere Bezugszeichen verzichtet. Die Symboldarstellung der Komponenten entspricht den bisherigen Figuren. Die Darstellung entspricht einem vollständigen, mit dem erfindungsgemäßen Verfahren erstellten Programm. Das erstellte Programm wird in einen Applikationsrahmen erzeugt. Durch das Startereignis kann das Programm aufgerufen werden. Bei einem Steuerungsprogramm einer Telekommunikationsanlage ist dies beispielsweise das "Anschalten". Ebenso sollte ein definierter Terminierungsaufruf für ein korrektes Beenden des Programms vorgesehen sein. Diese Terminierungsmethode wäre bei einem Steuerungsprogramm einer Telekommunikationsanlage beispielsweise das "Herunterfahren" zum Ausschalten.

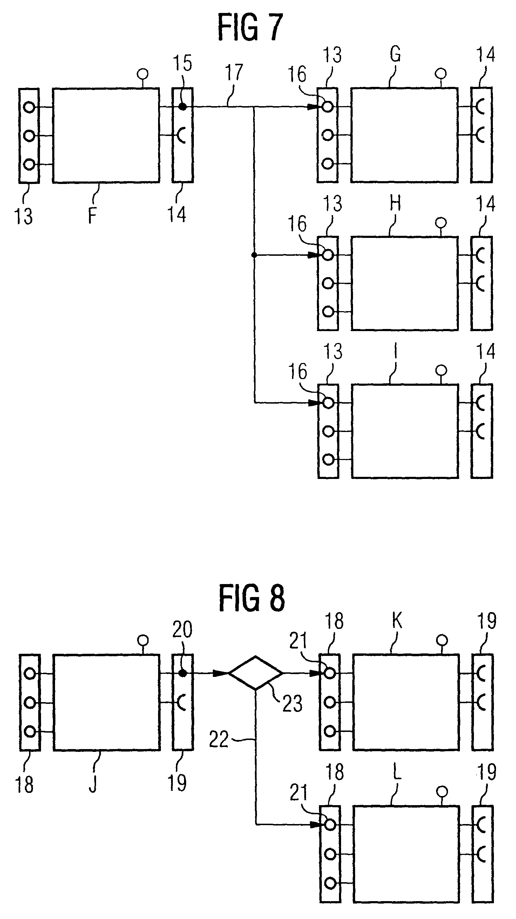

Fig. 7 zeigt vier Komponenten F,G,H,I mit jeweils einer Eingangsschnittstelle 13 und einer Ausgangsschnittstelle 14. Von einem Ereignis 15 der Ausgangsschnittstelle 14 der Komponente F besteht eine Verknüpfung 17 zu drei verschiedenen Methoden 16 der Eingangsschnittstellen 13 der Komponenten G,H,I. Die Figur zeigt ein Beispiel einer Verknüpfung 17, die von einem Ereignis 15 zu mehreren Methoden 15 in verschiedenen Eingangsschnittstellen 13 führt. Dabei hat der Zwischencode eine Reihenfolge der Ausführung zu definieren.

Fig. 8 zeigt drei Komponenten J,K,L mit jeweils einer Eingangsschnittstelle 18 und einer Ausgangsschnittstelle 19. Von einem Ereignis 20 der Ausgangsschnittstelle 19 der Komponente J besteht eine Verknüpfung 22 zu zwei verschiedenen Methoden 21 der Eingangsschnittstellen 18 der Komponenten K,L. Die Figur zeigt ein Beispiel einer Verknüpfung 22, die von einem Ereignis 20 gesteuert von einer Bedingungsabfrage 23 des Zwischencodes zu zwei Methoden 21 führt.

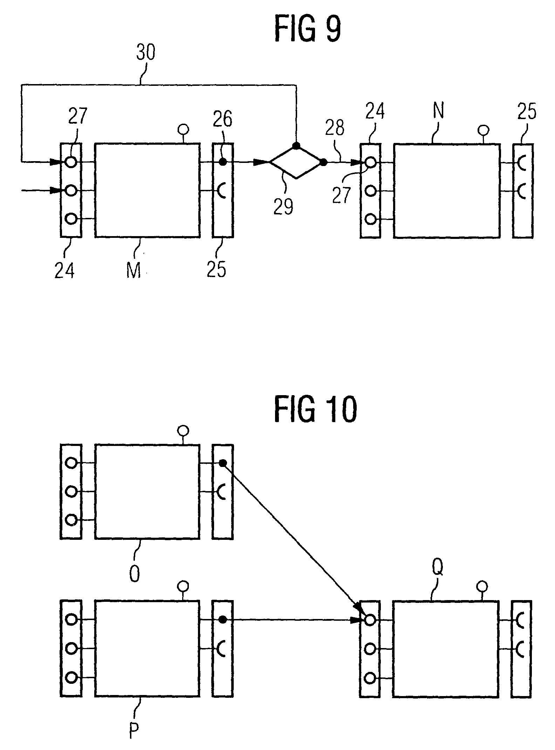

Fig. 9 zeigt zwei Komponenten M,N mit jeweils einer Eingangsschnittstelle 24 und einer Ausgangsschnittstelle 25. Von einem Ereignis 26 der Ausgangsschnittstelle 25 der Komponente M besteht eine Verknüpfung 28 zu zwei verschiedenen Methoden 27 der Eingangsschnittstellen 24 der Komponenten M,N. Die Figur zeigt ein Beispiel einer Verknüpfung 28, die gesteuert von einer Bedingungsabfrage 29 des Zwischencodes eine Schleife bildet. Durch die graphische Darstellung kann von einem Benutzer eine Schleife 30 definiert werden, indem ein Zweig der bedingten Verknüpfung 28 zu der Eingangsschnittstelle 24 der Komponente M zurückgeführt wird.

Fig.10 zeigt drei Komponenten O,P,Q. Die bereits in den Figuren zuvor erläuterten Bestandteile der graphischen Darstellung sind nicht mit Bezugszeichen versehen. Hier zeigen zwei Verknüpfungen 31 auf dieselbe Methode der Komponente Q. Dabei handelt es sich um zwei einfache Verknüpfungen, die dieselbe Methode aufrufen.

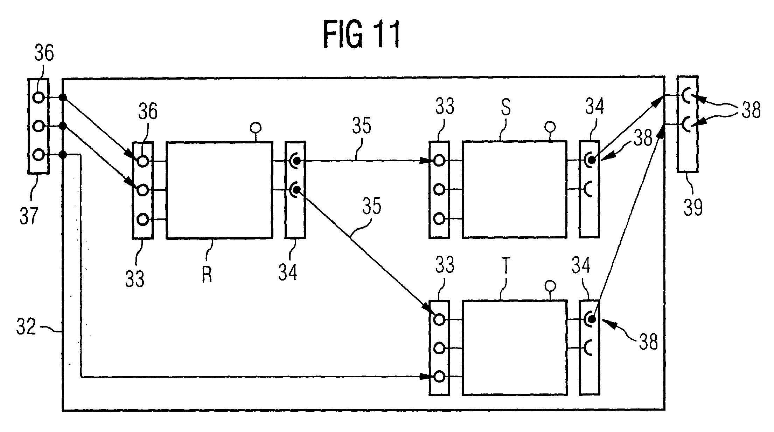

Fig.11 zeigt eine vorteilhafte Ausgestaltung des Verfahrens, mit dem die Bildung neuer Komponenten ermöglicht wird. Dabei werden Komponenten nach dem erfindungsgemäßen Verfahren zu einer neuen Gesamtkomponente 32 zusammengefaßt. In dem vorliegenden Beispiel werden die Komponenten R,S,T zu der Gesamtkomponente 32 zusammengefaßt. Die Komponenten R,S,T weisen Eingangsschnittstellen 33 und Ausgangsschnittstellen 34 auf. Durch interne Verknüpfungen 35 kann der Benutzer die Funktionalität der Gesamtkomponente 32 festlegen. Weiter kann graphisch festgelegt werden, welche Methoden 36 der Eingangsschnittstellen 33 in einer Gesamteingangs-Schnittstelle 37 zur Verfügung stehen. Ebenso kann graphisch festgelegt werden, welche Methoden und Ereignisse, die unter dem gemeinsamen Bezugszeichen 38 zusammengefaßt sind, der Ausgangs-schnittstelle 34 in einer Gesamtausgangs-Schnittstelle 39 zur Verfügung stehen. Die dadurch gebildete Gesamtkomponente hat dieselben Eigenschaften wie eine sonstige Komponente.

Durch das beschriebene Verfahren ist es auch programmierunkundigen Personen möglich, ein Programm zu erstellen. Dies ist insbesondere für Steuerungsprogramme von Telekommunikationsanlagen möglich, für die benötigten Komponenten gut vorhersehbar sind.

## Patentansprüche

1. Verfahren zur automatisierten Erzeugung von Software für einen Computer unter Verwendung von in ablauffähigem Code vorliegenden Komponenten (A-T), wobei die Komponenten (A-T) jeweils eine Eingangsschnittstelle (2,10,13,18,24,33) aufweisen, in der definiert sind:
- Methoden (4,9,16,21,27,36) der Komponente (A-T), die als Bestandteil der Komponente (A-T) aufgerufen und ausgeführt werden können,
sowie eine Ausgangsschnittstelle (1,8,14,19,25,34) aufweisen, in der definiert sind:
- Datenformate für Daten eines Ereignisses (3,7,15,20,26, 38) als Ergebnis der Ausführung einer Methode oder einer Komponente (A-T),
- und Methoden (3,7,15,20,38) die in der Komponente (A-T) aufgerufen werden können, jedoch nicht in dieser lauffähig enthalten sind,
mit den Verfahrensschritten:
a) Abbilden eines Symbols entsprechend einer Komponente (A-T) mit der Eingangsschnittstelle (2,10,13,18,24,33) und der Ausgangsschnittstelle (1,8,14,19,25,34) in einem graphischen Editor;
b) Anbieten einer Auswahlmöglichkeit für eine gerichtete Verknüpfung (5,6,17,22,28,31,35) einer Ausgangsschnittstelle (1,8,14,19,25,34) mit einer Eingangsschnittstelle (2,10, 13,18,24,33);
c) Erzeugen eines die Komponenten verknüpfenden Programmcodes in Abhängigkeit der vorgenommenen Verknüpfungen.

2. Verfahren nach Anspruch 1,
**dadurch gekennzeichnet,**
- **daß** der Programmcode abhängig von Ereignissen (3,7,15,20, 26, 38) Methoden (4,9,16,21,27,36) aufruft, die in der Eingangsschnittstelle (2,10,13,18,24,33) definiert sind, und daß der Programmcode Daten des Ereignisses (3,7,15,20, 26,38) an die aufzurufende Methode (4,9,16,21,27,36) übergibt, die von der aufzurufenden Methode (4,9,16,21,27,36) erwartet werden
- und/oder daß der Programmcode die Datenformate der aufrufbaren Methoden in der Ausgangsschnittstelle (1,8,14,19,25, 34) in die Datenformate der verfügbaren Methoden (4,9,16, 21,27,36) der Eingangsschnittstelle (2,10,13,18,24,33) sowie die Methoden selbst ineinander umsetzt.

3. Verfahren nach Anspruch 1 oder 2,
**dadurch gekennzeichnet,**
**daß** die Definition der über die Verknüpfungen (5,6,17,22,28, 31,35) aufrufbaren Methodenaufrufe in der Ausgangsschnittstelle (1,8,14,19,25,34) mit der Definition verfügbarer Methodenaufrufe (4,9,16,21,27,36) der Eingangsschnittstelle (2,10,13,18,24,33) und/oder die Datenformate eines Ereignisses (3,7,15,20,26,38) der Ausgangsschnittstelle (1,8,14,19, 25, 34) mit den an eine Methode (4,9,16,21,27,36) der Eingangsschnittstelle (2,10,13,18,24,33) zu übergebenden Datenformaten verglichen wird.

4. Verfahren nach Anspruch 3,
**dadurch gekennzeichnet,**
**daß** die Datenformate der aufrufbaren Methodenaufrufe (3,7,15, 20,38) in der Ausgangsschnittstelle (1,8,14,19,25,34) an die Datenformate der verfügbaren Methodenaufrufe (4,9,16,21,27, 36) der Eingangsschnittstelle (2,10,13,18,24,33) und/oder die Datenformate eines Ereignisses (3,7,15,20,26,38) der Ausgangsschnittstelle (1,8,14,19,25,34) an die an eine Methode (4,9,16,21,27,36) der Eingangsschnittstelle (2,10,13,18,24, 33) zu übergebenden Datenformate angepaßt werden, falls diese nicht kompatibel sind.

5. Verfahren nach einem der Ansprüche 1 bis 4,
**dadurch gekennzeichnet,**
**daß** eine Verknüpfung (17,22,28) von einem Ereignis (15,20,26) oder einer Methode (15,20) einer Ausgangsschnittstelle (14,19,25) zu mehreren Methoden (16,21,27) von Eingangsschnittstellen (13,18,24) gewählt werden kann.

6. Verfahren nach Anspruch 5,
**dadurch gekennzeichnet,**
**daß** für die Verknüpfung (22,28) eine Bedingung (23,29) zur Auswahl der Methoden (21,27) der Eingangsschnittstelle (18,24) bestimmt werden kann.

7. Verfahren nach einem der vorhergehenden Ansprüche,
**dadurch gekennzeichnet,**
**daß** eine Eingangsschnittstelle (24) und die Ausgangsschnittstelle (25) derselben Komponente (M) angehören (Schleife).

8. Verfahren nach einem der vorhergehenden Ansprüche,
**dadurch gekennzeichnet,**
**daß** zu einer Methode einer Eingangsschnittstelle mehrere Verknüpfungen erfolgen können.

9. Verfahren nach einem der vorhergehenden Ansprüche,
**dadurch gekennzeichnet,**
**daß** eine Komponente (A-T) mehrfach als Symbol dargestellt werden kann.

10. Verfahren nach einem der vorhergehenden Ansprüche,
**dadurch gekennzeichnet,**
**daß** die Symbole für Komponenten (A-T) auf einer Darstellungsfläche frei angeordnet werden können.

11. Verfahren nach einem der vorhergehenden Ansprüche,
**dadurch gekennzeichnet,**
**daß** der Programmcode in einer Compilersprache erzeugt wird und anschließend compiliert wird und mit den Komponenten (A-T) zu einem lauffähigen Programm gebunden wird.

12. Verfahren nach einem der Ansprüche 1 bis 10,
**dadurch gekennzeichnet,**
**daß** der Programmcode in einer Interpretersprache erzeugt wird.

13. Verfahren nach Anspruch 12,
**dadurch gekennzeichnet,**
**daß** der Programmcode in der bekannten Interpretersprache XML (eXtensible Markup Language) erzeugt wird.

14. Verfahren nach Anspruch 12 oder 13,
**dadurch gekennzeichnet,**
**daß** der Programmcode mit den Komponenten (A-T) als dynamische Bibliothek und einem Interpreter zu einem lauffähigen Gesamtprogramm zusammengefaßt wird.

15. Verfahren nach einem der vorhergehenden Ansprüche,
**dadurch gekennzeichnet,**
**daß** ein oder mehrere Komponenten (R,S,T) nach obigen Verfahren zu einer neuen Gesamtkomponente (32) verbunden werden können und festgelegt werden kann, welche Methoden und Ereignisse (38) der Ausgangsschnittstellen (34) der benutzten Komponenten (R,S,T) die Ausgangsschnittstelle (39) der Gesamtkomponente (32), und welche Methoden (36) der Eingangsschnittstellen (33) der benutzten Komponenten die Eingangsschnittstelle (37) der Gesamtkomponente (32) bilden.

16. Anwendung des Verfahrens nach einem der vorhergehenden Ansprüche zur Erzeugung der Steuerungssoftware einer Telekommunikationsanlage.

17. Verfahren nach Anspruch 16,
**dadurch gekennzeichnet,**
**daß** als Telekommunikationsanlage eine Telefonvermittlung eingesetzt wird.

18. Anwendung des Verfahrens nach einem der Ansprüche 16 oder 17 zur Erzeugung der Steuerungssoftware einer Telekommunikationsanlage auf dem Steuercomputer der Telekommunikationsanlage.

19. Computer, so programmiert, daß ein Verfahren nach einem der Ansprüche 1 bis 19 auf diesem ablaufen kann.

20. Telekommunikationsanlage mit Steuerungscomputer, der so programmiert ist, daß ein Verfahren nach Anspruch 18 auf diesem abläuft.

21. Computerprogrammprodukt, das auf einem computergeeigneten Medium gespeichert ist, und das, wenn es auf einem Computer gestartet wird, ein Verfahren nach einem der Ansprüche 1 bis 15 durchführt.
